Europäisches Patentamt

European Patent Office

Office européen des brevets

(11) Publication number: **0 143 426**
**B1**

# (12) EUROPEAN PATENT SPECIFICATION

(45) Date of publication of patent specification: **01.02.89**

(51) Int. Cl.⁴: **H 01 G 1/01**

(21) Application number: **84114053.6**

(22) Date of filing: **21.11.84**

(54) Capacitor electrode compositions.

(30) Priority: **23.11.83 US 554789**

(43) Date of publication of application:
**05.06.85 Bulletin 85/23**

(45) Publication of the grant of the patent:
**01.02.89 Bulletin 89/05**

(84) Designated Contracting States:
**BE DE FR GB IT LU NL**

(56) References cited:
**EP-A-0 071 928**
**US-A-3 823 093**
**US-A-3 854 957**
**US-A-3 872 360**
**US-A-4 426 356**

**IBM TECHNICAL DISCLOSURE BULLETIN, vol.
23, no. 12, May 1981, pages 5593-5594, New
York, US; R.C. O'HANDLEY: "Near-eutectic
alloy conductors for glass-ceramic-based MLC"**

**CHEMICAL ABSTRACTS, vol. 81, 1974, page
386, abstract no. 43006w, Columbus, Ohio, US;
& JP-A-7 408 528**

(73) Proprietor: **E.I. DU PONT DE NEMOURS AND
COMPANY**
**1007 Market Street**
**Wilmington Delaware 19898 (US)**

(72) Inventor: **Nair, Kumaran Manikantan**
**100 Rolling Meadow**
**East Amherst New York 14051 (US)**

(74) Representative: **von Kreisler, Alek, Dipl.-Chem.
et al**
**Deichmannhaus am Hauptbahnhof**
**D-5000 Köln 1 (DE)**

Courier Press, Leamington Spa, England.

# EP 0 143 426 B1

**Description**

Field of invention

The invention relates to compositions for the manufacture of capacitors and, in particular, to compositions for the fabrication of electrodes for capacitors.

Background of the invention

Monolithic capacitors comprise a plurality of dielectric layers, at least two of which bear metallizations (electrodes) in desired patterns. Such capacitors are made from a green (unfired) tape of particles of dielectric materials held together with an organic binder by cutting pieces of the tape from a sheet of tape, metallizing some of the tape pieces, stacking and laminating the pieces of tape, cutting the laminate to form individual capacitors and firing the resultant individual capacitors to drive off the organic binder and vehicles and to form a sintered (coherent) body.

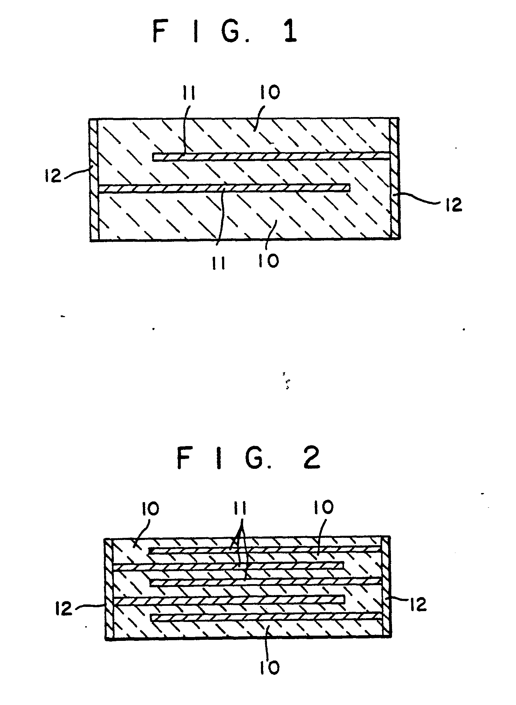

Rodriguez et al. in U.S. Patent 3,456,313 disclose a process for making multilayer capacitors. Fig. 1 of U.S. Patent 3,223,905 to Fabricus shows a multilayer capacitor which may be of alternating palladium and barium titanate layers.

Metallizations useful in producing electrodes for capacitors normally comprise finely divided metal particles applied to dielectric green tapes in the form of a dispersion of such particles in an inert liquid organic medium (vehicle). Selection of the composition of the metal particles is usually based on a compromise of cost and performance. Since base metals often are oxidized in air at elevated temperatures and/or in many cases react with the dielectric material during firing, noble metals are usually preferred because of their relative inertness during firing of the laminates to produce electrically continuous conductors. By far the most widely used monolithic capacitor electrode materials have been palladium and solid solutions containing palladium and silver.

In the fabrication of multilayer capacitors, the required solidus temperature of the electrode metal will ordinarily be determined by the sintering temperature of the dielectric material on which it is applied. In turn, the sintering temperature is determined by the physical and chemical characteristics of the dielectric material. This is discussed below in section B, of the detailed description of the invention. Thus, to prevent excessive diffusion of the noble metal into the dielectric layer during sintering, it is preferred to employ a noble metal component metal, alloy or mixture having a solidus temperature higher than the firing temperature and preferably at least 50°C higher.

Silver would most frequently be the noble metal electrode material of choice because it has both suitable conductive properties and the lowest cost of the noble metals. However, when used in capacitors, the electrode material is subjected to firing temperatures of 1100°C or even higher. These temperatures are necessary for most state-of-the-art dielectric materials to be sufficiently sintered to obtain suitable densification and dielectric properties. Because metallic silver melts at only about 961°C, silver metal alone would melt completely at 1100°C or higher and be of such low viscosity that it would too readily diffuse into the dielectric material and thus substantially degrade the capacitor properties of the sintered dielectric material. For this reason, it is preferred to employ an alloy of palladium and silver, which has a suitably high solidus temperature that it cannot migrate significantly into the dielectric material at normal firing temperatures. This alloy can be provided (1) in the form of already formed Pd/Ag alloy, (2) by the use of homogeneous coprecipitated mixtures of Pd and Ag, or (3) by the use of mixtures of Pd and Ag powders which undergo alloying at the firing conditions. However, the latter two sources of alloy are not as effective as the first for the reason that any unalloyed silver will be available to migrate into the dielectric layer.

As a result of the above considerations for those X7R and NPO class capacitors which are fired at 1100°C, a 30/70 Pd/Ag mixture is used. On the other hand, for a Z5U class capacitor, which is fired at 1200°C or higher, a 70/30 Pd/Ag mixture or alloy or 100% Pd is used as the noble metal component. In general, the ratio of palladium to silver is dependent upon the maximum firing temperature which is used to densify the dielectric material to a well sintered body.

Because of wide fluctuations in the price of noble metals such as palladium and silver, there is considerable incentive to replace noble metals with less expensive materials such as base metals. This is especially true of palladium which is currently about 15 times as expensive as silver. However, this is difficult to do without sacrificing the properties of the electrodes and/or of the dielectric materials as well.

Summary of the invention

The invention is therefore directed in its primary aspect to a metallization for the preparation of electrodes for multilayer capacitors which are comprised of alternating layers of electrode and dielectric materials which have been fired at a temperature sufficient to sinter the electrode and dielectric materials consisting essentially of finely divided particles of:

(a) noble metal(s), solid solution(s) of noble metals or mixtures of noble metals which form said solution(s) during firing, the solidus of the noble metal(s) or solid solution(s) being below the sintering temperature of the dielectric material.

(b) an inorganic material containing a base metal or ion of a base metal which is substantially soluble in (a) below the sintering temperature of the dielectric material and forms a solution with (a) at or below the sintering temperature, the proportion of (b) being sufficient that the solidus of the solid solution of (a) and

2

metal or metal ion from (b) which results from the sintering of the electrode and dielectric material is higher than the solidus of (a) and is at least 10°C higher than the sintering temperature of the dielectric material.

In a second aspect, the invention is directed to a dispersion of the above-described metallization in organic medium.

In a third aspect, the invention is directed to the method of forming the above-described single plate and multilayer capacitors by:

(1) applying a layer of the above-described dispersion to each of a plurality of layers of finely divided particles of dielectric material dispersed in organic binder;

(2) laminating a plurality of the electrode-printed dielectric layers to form an assemblage of alternating layers of dielectric material and electrode material; and

(3) firing the assemblage of step (2) to remove the organic medium and organic binder therefrom and to sinter the noble metal-containing electrode material and the dielectric material.

In a fourth aspect, the invention is directed to both single plate and multilayer capacitors comprised of fired alternating layers of dielectric material and the above-described metallization.

Brief description of the drawing

The drawing consists of three figures.

Fig. 1 is a schematic representation of a cross-section of a single plate capacitor which comprises a pair of opposing electrode material layers 11, each having electrical communication with conductive terminations 12, the electrode layers 11 being separated by a layer of dielectric material 10.

Fig. 2 is a schematic representation of a cross-section of a multilayer capacitor which comprises a plurality of opposing electrode layers 11, each having electrical communication with a conductive termination 12 which is common to every other electrode layer 11, the electrode layers 11 being separated by a layer of dielectric material 10.

Fig. 3 is a scanning electron microscope photograph of the surface of a layer of the metallization of the invention which has been applied to a substrate and fired. Magnification is 3000×.

Detailed description of the invention

A. Noble metal

Suitable primary conductive materials for the electrode metallizations of the invention are palladium, silver and mixtures and solid solutions thereof in all proportions.

The particles of the noble metal component, as well as the inorganic base metal component(s) of the metallization which are used in the invention, should be sufficiently small that their pastes can be used in conventional screen-printing operations and that the particles can be readily sintered. Furthermore, in the production of capacitors from green dielectric sheets, the presence of coarse particles in the inner electrode prints must be avoided lest they cause puncturing of the green dielectric sheets. Generally, the metallizations are such that at least 90% of the noble metal and of the additive oxide particles are no greater than 5 microns in diameter. That is, in general, their largest dimension should be no greater than 5 microns. However, when the thickness of the green dielectric layer is less than 1 mil, the particles must be correspondingly smaller.

It is further preferred that the noble metal particles be treated to remove any surface oxidation therefrom by which the surface of the particles become more efficient in their function as conductors. A preferred method of doing this is disclosed in copending U.S. patent application Serial No. 430,871.

B. Inorganic base metal material

The inorganic base metal materials which are suitable for the method of the invention are those which contain base metals or base metal ions which (1) are substantially soluble in the primary noble metal or noble metal solid solution below the sintering temperature of the dielectric material on which they are applied, (2) will dissolve substantially in the noble metal or noble metal solid solution at the sintering conditions of the dielectric material on which they are applied and (3) the resulting solid solution of noble metal or noble metal solid solution and base metal or base metal ion has a solidus higher than the solidus of the starting noble metal or noble metal solution. While other suitable base metals and base metal ion materials may exist, those known to be suitable are $ZnO$, $CdO$, $SnO_2$, $Ni$, $Ni_3B$, $NiO$, $GeO_2$, $SnO_2/Sb$ (solid solution), $SnO_2/In$ (solid solution), $MoO_3$ and mixtures and solutions thereof. It will be recognized that the precursors of these materials, that is, finely divided materials which form such metal oxides or solutions under normal firing conditions, can be used as well.

The inorganic base metal materials are subject to the same particle size limitations as the noble metal particles. However, in preferred metallizations, substantially all of the base metal-containing particles are less than 1 micron in size and, in more preferred metallizations, substantially all of the particles are less than 0.5 micron in size. Still further preferred are those particles where the surface area is at least 5 $m^2/g$ or greater and, optimally, particles having a surface area of at least 8 $m^2/g$ or greater.

The inorganic base metal-containing materials are admixed with the noble metal in proportions which will cause a substantial amount of the base metal or base metal ion to be dissolved in the noble metal when the admixture is subjected to the sintering temperature of the dielectric material on which it is to be applied. By "substantial amount" is meant an amount which will result in elevating the solidus of the noble metal solution to at least 10°C above the sintering temperature of the dielectric material. Thus, for a given noble metal- and given base metal-containing material, the amount of base metal in the admixture to effect a given elevation of the solidus will relate inversely to the sintering temperature. In other words, more base metal will be dissolved at higher sintering temperatures. It will be noted that not all of the base metal in the admixture need be incorporated in the solid solution, but only enough to raise the solidus appropriately. Though the solidus of the base metal-containing solid solution can be much higher, it is nevertheless preferred that it be no more than 100°C above the sintering temperature and preferably no more than 50°C above that temperature to facilitate the sintering and densification of the electrode during firing.

## C. Organic medium

A further important component of the compositions in accordance with the invention is the organic medium.

The main purpose of the organic medium is to serve as a vehicle for dispersion of the finely divided solids of the composition in such form that it can readily be applied to ceramic or other substrates. Thus, the organic medium must first of all be one in which the solids are dispersible with an adequate degree of stability. Secondly, the rheological properties of the organic medium must be such that they lend good application properties to the dispersion. Thirdly, the solvent component of the medium must not significantly dissolve or otherwise attack the binder component of the dielectric tape.

Most thick film compositions are applied to a substrate by means of screen printing. Therefore, they must have appropriate viscosity so that they can be passed through the screen readily. In addition, they should be thixotropic in order that they set up rapidly after being screened, thereby giving good resolution. While the rheological properties are of primary importance, the organic medium is preferably formulated also to give appropriate wettability of the solids and the substrate, good drying rate, dried film strength sufficient to withstand rough handling, and good firing properties. Satisfactory appearance of the fired composition is also important.

In view of all these criteria, a wide variety of liquids can be used as organic medium. The organic medium for most thick film compositions is typically a solution of resin in a solvent frequently also containing thixotropic agents and wetting agents. The solvent usually boils within the range of 130—350°C.

By far, the most frequently used resin for this purpose is ethyl cellulose. However, resins such as ethylhydroxyethyl cellulose, wood rosin, mixtures of ethyl cellulose and phenolic resins, polymethacrylates of lower alcohols, and monobutyl ether of ethylene glycol monoacetate can also be used.

Suitable solvents include kerosene, mineral spirits, dibutylphthalate, butyl carbitol, butyl carbitol acetate, hexylene glycol, and high-boiling alcohols and alcohol esters. Various combinations of these and other solvents are formulated to obtain the desired viscosity, volatility and compatibility with the dielectric tape. Water-soluble solvent systems can also be used.

Among the thixotropic agents which are commonly used are hydrogenated castor oil and derivatives thereof and ethyl cellulose. It is, of course, not always necessary to incorporate a thixotropic agent since the solvent/resin properties coupled with the shear thinning inherent in any suspension may alone be suitable in this regard. Suitable wetting agents include phosphate esters and soya lecithin.

The ratio of organic medium to solids in the paste dispersions can vary considerably and depends upon the manner in which the dispersion is to be applied and the kind of organic medium used. Normally, to achieve good coverage, the dispersions will contain complementally by weight 40—90% solids and 60—10% organic medium.

The pastes are conveniently prepared on a three-roll mill. The viscosit of the pastes is typically 2—50 Pa . S when measured at room temperature on Brookfield viscometers at low, moderate and high shear rates. The amount and type of organic medium (vehicle) utilized is determined mainly by the final desired formulation viscosity and print thickness.

## D. Dielectric material

The dielectric material used with the present invention to make multilayer capacitors may be any dielectric material which is compatible with the electrode composition according to principles well established in the art. Such dielectrics include barium titanate, titanium dioxide, alumina, zirconia, barium zirconate, lead zirconate, strontium titanate, calcium titanate, calcium zirconate, lead zirconate, lead zirconate titanate, neodymium titanate, etc.

Typical compositions for dielectric materials of the three most common types of dielectrics are given in Table 1 below:

TABLE 1
Typical dielectric material compositions

| Capacitor class | Composition |
|---|---|
| NPO | $BaTiO_3$, $Nd_2Ti_2O_7$, Glass |
| (Class I) | $BaTiO_3$, Mg $TiO_3$, $\alpha$-$Zn_2TiO_4$ (Minor) |
| | $BaTiO_3$, $W_2Ti_2O_7$ (Minor) |
| X7R | $BaTiO_3$, $Pb_2Ti_2O_6$, $Bi_4Ti_3O_{12}$ |
| (Class II—Mid K) | |
| Z5U | $BaTiO_3$, $BaSnO_3$ |
| (Class II—High K) | $BaTiO_3$, $CaSnO_3$, $SnO_2$. |

The above-referred dielectric classifications are those of the Electronic Institute of America (EIA).

E. Capacitor processing

1. Green tape processing

As described above, most multilayer capacitors are fabricated by printing the electrode metallization in the desired pattern upon a dielectric substrate which is a green (unfired) tape of dielectric material particles bound together by an organic binder. The printed dielectric substrates are stacked, laminated and cut to form the desired capacitor structures. The green dielectric material is then fired to effect removal of the organic medium from the electrode material and of the organic binder from the dielectric material. The removal of these materials is accomplished by a combination of evaporation and thermal decomposition during the firing operation. In some instances, it may also be desirable to interpose a preliminary drying step prior to firing.

The organic binder component of the dielectric tapes is ordinarily a flexible polymer of a lower alkyl acrylate or lower alkyl methacrylate such as methyl acrylate, methyl methacrylate and ethyl acrylate or mixtures thereof. Such polymers can in some instances contain plasticizers and other additives to impart particular flexibility and/or other physical properties to the binder polymer. Water-based polymers such as latices and water-soluble polymers can also be used as the binder component of the dielectric tape.

When firing the above-described capacitor assemblages, it is preferred to employ a first firing step in which the assemblage is heated slowly to 100—550°C which will be effective to remove substantially all of the organic material without damage to the laminated assemblage. Typically the organic burnout period is 18—24 hours to assure complete removal of organics. When this has been completed, the assemblage is then heated more rapidly to the desired sintering temperature.

The desired sintering temperature is determined by the physical and chemical characteristics of the dielectric material. Ordinarily the sintering temperature will be chosen to obtain maximum densification of the dielectric material. For barium titanate-based dielectric systems, this temperature will range from 1100—1450°C. However, it will be recognized by those skilled in the art of fabricating capacitors that maximum densification is not always needed. Therefore, the term "sintering temperature" refers to the temperature (and implicitly the amount of time as well) to obtain the desired degree of densification of the dielectric for the particular capacitor application. Sintering times also vary with the dielectric composition, but ordinarily on the order of two hours at the sintering temperature is preferred.

Upon completion of sintering, the rate of cooling to ambient temperature is carefully controlled in accordance with resistance of the components to thermal shock.

2. Green chip processing

In addition to the foregoing described green tape process, single layer capacitors can be prepared by the green chip process in which substrates ("chips") about 25 mil thick are formed from dielectric material particles bound together by an organic binder. Such capacitors are fabricated by printing and drying an electrode layer on both sides of the chip and firing the printed chip. The materials and firing techniques are basically the same as for the green tape process for making MLC's. As used herein in the following examples, the term "K-Square" refers to 35 mil thick green chips of 1"×1" size.

The following properties which are relevant to the ability of a given capacitor to function properly are referred to in the examples:

*Capacitance* is a measure of the capability of a material to store an electrical charge expressed mathematically, C=KAN divided by t, where A=area overlap of electrodes, t is thickness of dielectric layer, K is dielectric constant, and N is number of dielectric layers.

The units of capacitance are farads or fractions thereof such as microfarads ($10^{-6}$ farad), nanofarads ($10^{-9}$ farad) or picrofarads ($10^{-12}$ farad).

*Dissipation factor (DF)* is a measure of the phase difference between voltage and current. In a perfect capacitor, the phase difference would be 90°. However, in practical dielectric systems, DF is less than 90° because of leakage and relaxation losses. In particular, DF is the tangent of the angle by which the current lags the 90° vector.

*Insulation resistance (IR)* is a measure of the ability of a charged capacitor to withstand leakage in DC current. Insulation resistance is a constant for any given dielectric regardless of capacitance.

In the examples which follow, Pd/Ag powder mixture was dry blended with the indicated amount by weight of base metal material and then dispersed in organic medium to 100 parts by weight total dispersion. Each of the thusly formulated electrode pastes was compared with a control paste consisting of 50 parts by weight of 30/70 Pd/Ag powder dispersed in 50 parts by weight organic medium.

Electrical properties of the fired electrode materials were determined on an assemblage consisting of a patterned layer of electrode composition printed and dried on both sides of a 1-mil thick commercial green NPO-type dielectric tape after which it was fired at 1100°C. However, capacitance was determined on a 1×1″ disc capacitor consisting of a patterned layer of electrode composition printed on both sides of an approximately 25-mil thick laminated green dielectric substrate. After drying each of the printed layers, the assemblage was fired at 1100°C maximum temperature over a 24-hour cycle.

Examples
Examples 1—4

Using the procedures described above, two series of chip capacitors were prepared on K-Squares on which the electrodes were 7/8″ diameter circles. On one series of chips, the dielectric material was Solid States Dielectrics (SSD) CL-750 and on the other series the dielectric material was SSD BL-162. The former material, CL-750 is a bismuth-containing K65 NPO dielectric material which is compatible with 70/30 Ag/Pd internal electrodes and has a firing range of 1105—1135°C. The latter material, BL-162 is a "low fire" bismuth-containing K1500 BX dielectric material which is also compatible with 70/30 Ag/Pd internal electrodes and fires at 1090—1120°C. Solid States Dielectrics is a part of the Electronic Materials Division of the Photosystems and Electronic Products Department of E. I. du Pont de Nemours & Co., Inc, Wilmington, DE.

In Table 2 which follows, the electrode composition used for each capacitor is given as well as the electrical properties of the chip resistors made therefrom. The electrical data are average values based on the measurement of approximately 30 capacitors in each instance.

TABLE 2
K-Square capacitor data

| Example No. | 1 | 2 | 3 |
|---|---|---|---|
| **Composition** | | | |
| Ag (% wt) | 35 | 30 | 35 |
| Pd | 10 | 10 | 10 |
| $SnO_2$ | 10 | 10 | 10 |
| Glass ($Pb_5Ge_3O_{11}$) | 0 | 0 | 3 |
| Organics | 45 | 50 | 42 |
| **Properties on CL-750** | | | |
| C (pF) | 26.4 | 17.5 | 28.6 |
| DF (%) | 0.9 | 0.5 | 0.7 |
| IR ($\Omega$/100 V DC) | $>10^{11}$ | $>10^{10}$ | $>10^{11}$ |
| **Properties on BL-162** | | | |
| IR ($\Omega$/100 V DC) | $>10^{10}$ | $>10^{12}$ | $>10^{12}$ |

TABLE 2 (continued)

| Example No. | 4 | Control |
|---|---|---|
| Composition | | |
| Ag (% wt) | 30 | 35 |
| Pd | 10 | 15 |
| $SnO_2$ | 10 | 0 |
| Glass ($Pb_5Ge_3O_{11}$) | 3 | 0 |
| Organics | 47 | 50 |
| Properties on CL-750 | | |
| C (pF) | 24.4 | 21.8 |
| DF (%) | 0.5 | 1.7 |
| IR ($\Omega$/100 V DC) | $>10^{11}$ | $>10^{10}$ |
| Properties on BL-162 | | |
| C (pF) | 727 | 612 |
| DF (%) | 1.0 | 1.32 |
| IR ($\Omega$/100 V DC) | $>10^{12}$ | $>10^{11}$ |

The foregoing data show that the use of the tin oxide as an "alloying" material resulted in both lower DF and higher IR.

Examples 5—8

In the same manner as Example 1, a series of four further compositions was prepared and tested on K-Squares. In Table 3 which follows, the electrode compositions and the electrical properties of the capacitors made therefrom are given.

TABLE 3
K-Square capacitor data

| Example No. | 5 | 6 |
|---|---|---|
| Composition | | |
| Ag (% wt) | 35 | 35 |
| Pd | 8 | 5 |
| $SnO_2$ | 5 | 5 |
| ZnO | 0 | 0 |
| Glass ($Pb_5Ge_3O_{11}$) | 3 | 3 |
| Organics | 49 | 52 |
| Properties on CL-750 | | |
| C (pF) | 26.8 | 26.4 |
| DF (%) | 0.2 | 0.3 |
| IR ($\Omega$/100 V DC) | $>10^{11}$ | $>10^{11}$ |
| Properties on BL-162 | | |
| C (pF) | 719 | 765 |
| DF (%) | 1.06 | 1.01 |
| IR ($\Omega$/100 V DC) | $>10^{12}$ | $>10^{12}$ |

7

TABLE 3 (continued)

| Example No. | 7 | 8 |
|---|---|---|
| Composition | | |
| Ag (% wt) | 35 | 35 |
| Pd | 10 | 5 |
| $SnO_2$ | 5 | 0 |
| ZnO | 0 | 8 |
| Glass ($Pb_5Ge_3O_{11}$) | 3 | 3 |
| Organics | 47 | 49 |
| Properties on CL-750 | | |
| C (pF) | 25.6 | — |
| DF (%) | 0.3 | — |
| IR ($\Omega$/100 V DC) | $>10^{11}$ | — |
| Properties on BL-162 | | |
| C (pF) | 760 | 477 |
| DF (%) | 1.04 | 3.5 |
| IR ($\Omega$/100 V DC) | $>10^{12}$ | — |

The foregoing data show that inorganic oxide concentrations only half as high as Examples 1—4 are, nevertheless, quite effective.

Examples 9—29

In the same manner as Examples 1—8, a series of 21 compositions was prepared and tested on K-Squares. The electrode compositions and electrical properties of the composite capacitors prepared therefrom are given in Table 4 below.

TABLE 4
K-Square capacitor data

| Example No. | 9 | 10 | 11 |
|---|---|---|---|
| Composition | | | |
| Ag (% wt) | 35 | 35 | 35 |
| Pd | 8 | 8 | 8 |
| $SnO_2$ | 5 | 8 | 10 |
| Glass ($Pb_5Ge_3O_{11}$) | 3 | 3 | 3 |
| Organics | 49 | 46 | 44 |
| Properties on CL-750 | | | |
| C (pF) | 29.8 | 25.3 | 28.2 |
| DF (%) | 0.8 | 0.9 | 0.3 |
| Properties on BL-162 | | | |
| C (pF) | 693 | 709 | 718 |
| DF (%) | 1.24 | 1.08 | 1.05 |

# EP 0 143 426 B1

TABLE 4 (continued)

| Example No. | 12 | 13 |
|---|---|---|
| **Composition** | | |
| Ag (% wt) | 35 | 39.4 |
| Pd | 5 | 5.6 |
| $SnO_2$ | 8 | 5 |
| Glass ($Pb_5Ge_3O_{11}$) | 3 | 3 |
| Organics | 49 | 47 |
| **Properties on CL-750** | | |
| C (pF) | 11 | 30.6 |
| DF (%) | 1 | 0.4 |
| **Properties on BL-162** | | |
| C (pF) | 753 | 702 |
| DF (%) | 1.07 | 1.2 |

TABLE 4 (continued)

| Example No. | 14 | 15 |
|---|---|---|
| **Composition** | | |
| Ag (% wt) | 39.4 | 43.8 |
| Pd | 5.6 | 6.2 |
| $SnO_2$ | 8 | 5 |
| Glass ($Pb_5Ge_3O_{11}$) | 3 | 3 |
| Organics | Bal | Bal |
| **Properties on CL-750** | | |
| C (pF) | 25.9 | 28.1 |
| DF (%) | 0.4 | 1.6 |
| **Properties on BL-162** | | |
| C (pF) | 722 | 773 |
| DF (%) | 1.2 | 1.19 |

TABLE 4 (continued)

| Example No. | 16 | 17 |
|---|---|---|
| **Composition** | | |
| Ag (% wt) | 35 | 35 |
| Pd | 8 | 5 |
| Ni | 5 | 5 |
| Cu | 0 | 0 |
| ZnO | 5 | 8 |
| Glass ($Pb_5Ge_3O_{11}$) | 3 | 3 |
| $SnO_2$ | 0 | 0 |
| Organics | | |
| **Properties on CL-750** | | |
| C (pF) | 25.3 | 1.3 |
| DF (%) | 0.5 | — |
| **Properties on BL-162** | | |
| C (pF) | 643 | 444 |
| DF (%) | 1.4 | 1.8 |

TABLE 4 (continued)

| Example No. | 18 | 19 |
|---|---|---|
| Composition | | |
| Ag (% wt) | 35 | 35 |
| Pd | 8 | 5 |
| Ni | 0 | 0 |
| Cu | 5 | 5 |
| Glass (Pb$_5$Ge$_3$O$_{11}$) | 3 | 3 |
| ZnO | 5 | 8 |
| SnO$_2$ | 0 | 0 |
| Organics | 44 | 44 |
| Properties on CL-750 | | |
| C (pF) | 32.9 | 28 |
| DF (%) | 0.1 | 0.1 |
| Properties on BL-162 | | |
| C (pF) | 573 | 540 |
| DF (%) | 1.6 | 1.5 |

TABLE 4 (continued)

| Example No. | 20 | 21 |
|---|---|---|
| Composition | | |
| Ag (% wt) | 35 | 35 |
| Pd | 5 | 5 |
| Ni | 5 | 5 |
| Cu | 5 | 5 |
| Glass (Pb$_5$Ge$_3$O$_{11}$) | 3 | 3 |
| ZnO | 3 | 0 |
| SnO$_2$ | 0 | 0 |
| Properties on CL-750 | | |
| C (pF) | 22 | 2.5 |
| DF (%) | 1.2 | 0.4 |
| Properties on BL-162 | | |
| C (pF) | 530 | 395 |
| DF (%) | 1.5 | 1.4 |

TABLE 4 (continued)

| Example No. | 22 | 23 |
|---|---|---|
| Composition | | |
| Ag (% wt) | 35 | 35 |
| Pd | 8 | 8 |
| Ni | 5 | 0 |
| Cu | 0 | 5 |
| Glass (Pb$_5$Ge$_3$O$_{11}$) | 5 | 5 |
| ZnO | 0 | 0 |
| SnO$_2$ | 5 | 5 |
| Properties on CL-750 | | |
| C (pF) | 28 | 31 |
| DF (%) | 0.1 | 0.1 |
| Properties on BL-162 | | |
| C (pF) | 762 | 620 |
| DF (%) | 1.0 | 1.3 |

TABLE 4 (continued)
K-Square capacitor data

| Example No. | 24 | 25 | 26 |
|---|---|---|---|
| Composition | | | |
| Ag (% wt) | 35 | 35 | 35 |
| Pd | 10 | 5 | 10 |
| SnO$_2$:Sb | 5 | 10 | 5 |
| Glass (Pb$_5$Ge$_3$O$_{11}$) | 1 | 1 | 3 |
| ZnO | 0 | 0 | 3 |
| Organics | 49 | 49 | 44 |
| Properties on CL-750 | | | |
| C (pF) | 26.9 | | 32.2 |
| DF (%) | 0.4 | | 0.1 |
| IR (Ω/100 V DC) | >10$^{11}$ | | |
| Properties on BL-162 | | | |
| C (pF) | 601 | | 793 |
| DF (%) | 1.22 | | 1.31 |
| IR (Ω/100 V DC) | >10$^{12}$ | | |

TABLE 4 (continued)
K-Square capacitor data

| Example No. | 27 | 28 | 29 |
|---|---|---|---|
| Composition | | | |
| Ag (% wt) | 35 | 35 | 35 |
| Pd | 8 | 5 | 3 |
| SnO$_2$:Sb | 5 | 5 | 5 |
| Glass (Pb$_5$Ge$_3$O$_{11}$) | 3 | 3 | 3 |
| ZnO | 5 | 8 | 10 |
| Organics | 44 | 44 | 44 |
| Properties on CL-750 | | | |
| C (pF) | 31.7 | 22.7 | 0.8 |
| DF (%) | 0.1 | 0.1 | — |
| IR (Ω/100 V DC) | | | |
| Properties on BL-162 | | | |
| C (pF) | 602 | 436 | 2.0 |
| DF (%) | 2.4 | 2.7 | — |
| IR (Ω/100 V DC) | >10$^{12}$ | | |

These data show that at a constant concentration of Ag, the electrical properties of the capacitors made therefrom are improved with higher relative amounts of Pd in the metallization. The data also show the use of selected inorganic additives to obtain optimum properties.

Examples 30—33

A series of four electrode compositions in accordance with the invention was compared with a conventional electrode composition containing quite high amounts of Pd by fabricating the test samples into five layer multilayer capacitors using the green tape process. The capacitors containing BL-162 were cut to a size of 120 mil×9 mils and the capacitors containing CL-750 were cut to a size of 220×250 mils. As used herein, the term "five-layer" refers to the number of active dielectric layers. Thus the test capacitors contained six electrode layers and five active dielectric layers. The electrical properties of the capacitors are given in Table 5 below.

11

### TABLE 5
#### Five-layer capacitor data

| Example No. | 1 | 2 |
|---|---|---|
| Composition | | |
| Ag (% wt) | 35 | 35 |
| Pd | 8 | 5 |
| $SnO_2$:Sb | 0 | 0 |
| $SnO_2$ | 5 | 5 |
| Glass ($Pb_5Ge_3O_{11}$) | 3 | 3 |
| ZnO | 0 | 0 |
| Organics | 49 | 52 |
| BL-162 | | |
| C (nF) | 12.6 | 12.6 |
| DF (%) | 1.8 | 1.6 |
| CL-750 | | |
| C (nF) | | 6.4 |
| DF (%) | | 0.01 |

### TABLE 5 (continued)

| Example No. | 3 | 4 |
|---|---|---|
| Composition | | |
| Ag (% wt) | 35 | 35 |
| Pd | 10 | 8 |
| $SnO_2$:Sb | 5 | 5 |
| $SnO_2$ | 0 | 0 |
| Glass ($Pb_5Ge_3O_{11}$) | 3 | 3 |
| ZnO | 3 | 5 |
| Organics | 44 | 44 |
| BL-162 | | |
| C (nF) | 13.8 | 10.6 |
| DF (%) | 2.1 | 2.2 |
| CL-750 | | |
| C (nF) | | |
| DF (%) | | |

### TABLE 5 (continued)

| Example No. | Control-1 | Control-2 |
|---|---|---|
| Composition | | |
| Ag (% wt) | 38.5 | 35 |
| Pd | 16.5 | 8 |
| $SnO_2$:Sb | 0 | 0 |
| $SnO_2$ | 0 | 0 |
| Glass ($Pb_5Ge_3O_{11}$) | 0 | 0 |
| ZnO | 0 | 0 |
| Organics | 45 | 57 |
| BL-162 | | |
| C (nF) | 12.4 | no reading |
| DF (%) | 1.8 | — |
| CL-750 | | |
| C (nF) | 6.08 | no reading |
| DF (%) | 0.01 | — |

These data show that the amount of Pd in the electrode composition can be reduced by as much as

# EP 0 143 426 B1

67% with use of the composition of the invention without any sacrifice of either capacitance or DF. The data also show low Pd compositions without inorganic oxides have no capacitance when the capacitor is fired under identical conditions.

Examples 34—50

A series of 18 electrode compositions was prepared. In this series, an electrode pattern was printed on a 96% $Al_2O_3$ substrate and the patterned substrate was covered with dielectric green tape. Then a series of conductive lines was printed on the green tape, after which the assemblage was fired to sinter the dielectric and electrode materials. Separate sets were fabricated in which different dielectric materials were used. As an indication of the conductivity of the printed electrode, the resistivity of each was measured and compared with the resistivity of the same electrode pattern printed on a 96% $Al_2O_3$ substrate without any overlying layer. These data are given in Table 6 below and they show that the substitution of the base metal oxides does not raise resistivity (lower conductivity) to any significant extent. Furthermore, in most instances, they produced essentially no change or gave slightly lower resistivities.

TABLE 6
Resistivity measurements

| Example No. | Control | 34 | 35 |
|---|---|---|---|
| Composition | | | |
| Ag (% wt) | 38.5 | 35 | 35 |
| Pd | 16.5 | 8 | 5 |
| Glass ($Pb_5Ge_3O_{11}$) | | 3 | 3 |
| $SnO_2$ | | 5 | 5 |
| ZnO | | | |
| $SnO_2$:Sb | | | |
| Organics | 45 | 49 | 52 |
| | | | |
| Resistivity ($\Omega/\square$) | | | |
| Alumina | 0.137 | 0.087 | 0.066 |
| CL-750 | 0.114 | 0.121 | 0.099 |
| BL-162 | 0.205 | 0.091 | 0.064 |

TABLE 6 (continued)

| Example No. | 36 | 37 | 38 |
|---|---|---|---|
| Composition | | | |
| Ag (% wt) | 35 | 35 | 35 |
| Pd | 10 | 8 | 5 |
| Glass ($Pb_5Ge_3O_{11}$) | 3 | 3 | 3 |
| $SnO_2$ | 5 | 5 | 5 |
| ZnO | 3 | 5 | 8 |
| $SnO_2$:Sb | | | |
| Organics | 44 | 44 | 44 |
| | | | |
| Resistivity ($\Omega/\square$) | | | |
| Alumina | 0.138 | 0.197 | 0.160 |
| CL-750 | 0.084 | 0.148 | 0.136 |
| BL-162 | 0.089 | 0.135 | 0.102 |

13

TABLE 6 (continued)

| Example No. | 39 | 40 | 41 |
|---|---|---|---|
| Composition | | | |
| Ag (% wt) | 35 | 35 | 35 |
| Pd | 3 | 10 | 8 |
| Glass ($Pb_5Ge_3O_{11}$) | 3 | 3 | 3 |
| $SnO_2$ | 5 | | |
| ZnO | 10 | 3 | 3 |
| $SnO_2$:Sb | | 5 | 5 |
| Organics | 44 | 44 | 44 |
| Resistivity ($\Omega/\square$) | | | |
| Alumina | 0.237 | 0.142 | 0.202 |
| CL-750 | | 0.078 | 0.125 |
| BL-162 | 0.251 | 0.077 | 0.112 |

TABLE 6 (continued)

| Example No. | 42 | 43 | 44 |
|---|---|---|---|
| Composition | | | |
| Ag (% wt) | 35 | 35 | 35 |
| Pd | 5 | 3 | 10 |
| Glass ($Pb_5Ge_3O_{11}$) | 3 | 3 | 1 |
| $SnO_2$ | | | |
| ZnO | 8 | 10 | |
| $SnO_2$:Sb | 5 | 5 | 5 |
| Organics | 44 | 44 | 49 |
| Resistivity ($\Omega/\square$) | | | |
| Alumina | 0.215 | 0.180 | 0.328 |
| CL-750 | | | 0.328 |
| BL-162 | 0.195 | 0.761 | |

TABLE 6 (continued)

| Example No. | 45 | 46 | 47 |
|---|---|---|---|
| Composition | | | |
| Ag (% wt) | 35 | 35 | 35 |
| Pd | 5 | 3 | 15 |
| Glass ($Pb_5Ge_3O_{11}$) | 1 | 1 | 3 |
| $SnO_2$ | | | |
| ZnO | | | |
| $SnO_2$:Sb | 10 | 12 | — |
| Organics | 49 | 49 | 47 |
| Resistivity ($\Omega/\square$) | | | |
| Alumina | 0.334 | 0.365 | |
| CL-750 | | | 0.327 |
| BL-162 | | | 0.296 |

TABLE 6 (continued)

| Example No. | 48 | 49 | 50 |
|---|---|---|---|
| **Composition** | | | |
| Ag (% wt) | 35 | 38.5 | 39.5 |
| Pd | 15 | 16.5 | 16.5 |
| Glass ($Pb_5Ge_3O_{11}$) | 5 | 3 | 5 |
| $SnO_2$ | | | |
| ZnO | | | |
| $SnO_2$:Sb | | | |
| Organics | | | |
| **Resistivity ($\Omega/\square$)** | | | |
| Alumina | 0.410 | 0.603 | 0.489 |
| CL-750 | 0.255 | 0.288 | 0.210 |
| BL-162 | 0.265 | 0.230 | 0.196 |

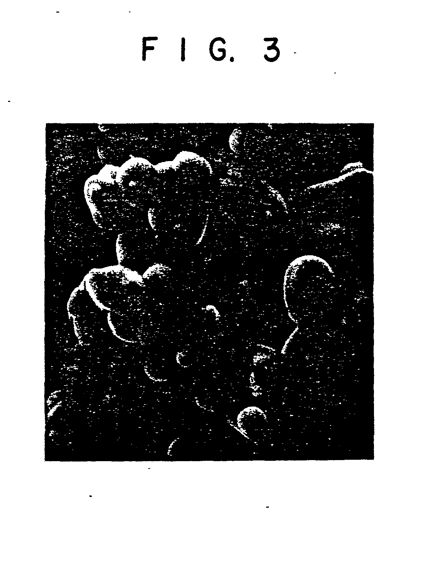

In Fig. 3 can be seen the magnified surface of a layer of the metallization of the invention which has been applied as a dispersion in an organic medium to a substrate of NPO dielectric tape and fired at 1100°C to effect sintering of both the conductive and the dielectric materials. The starting metallization consisted of Pd/Ag alloy and NiO. By energy dispersion x-ray (EDAX) analysis, it was found that both the larger and smaller size particles are single grains comprising Pd, Ag and Ni. However, the EDAX analysis indicates that the Ni content of the larger grains was considerably higher than that of the smaller grains.

## Claims

1. A metallization for the preparation of electrodes for multilayer capacitors which are comprised of alternating layers of electrode and dielectric materials which have been fired at a temperature sufficient to sinter the electrode and dielectric materials, consisting essentially of:

(a) noble metal(s), solid solution(s) of noble metals or mixtures of noble metals which form said solution(s) during firing, the solidus of the noble metal(s) or solid solution(s) being below the sintering temperature of the dielectric material; and

(b) an inorganic material containing a base metal or ion of a base metal which is substantially soluble in (a) below the sintering temperature of the dielectric material and forms a solution with (a) at or below the sintering temperature, the proportion of (b) being sufficient that the solidus of the solid solution of (a) and base metal or base metal ion from (b) which results from the sintering of the electrode and dielectric material is higher than the solidus of (a) and is at least 10°C higher than the sintering temperature of the dielectric material.

2. The metallization of claim 1 in which the noble metal is an alloy of palladium and silver having a solidus of at least 1000°C or a mixture of palladium and silver which is in the proportions of an alloy having a solidus of at least 1000°C.

3. The metallization of claim 1 in which the base metal-containing material is selected from the group consisting of ZnO, CdO, $SnO_2$, Ni, $Ni_3B$, NiO, $GeO_2$, $SnO_2$/Sb (solid solution), $SnO_2$/In (solid solution), $MoO_3$ and mixtures, solutions and precursors thereof.

4. A thick film composition comprising the metallization of any of claims 1—3 dispersed in an organic medium.

5. A method for forming a monolithic capacitor comprising:

(1) applying a layer of the composition of claim 4, to each of a plurality of layers of finely divided particles of dielectric material dispersed in organic binder;

(2) laminating a plurality of the electrode printed dielectric layers to form an assemblage of alternating layers of dielectric material and thick film composition; and

(3) firing the assemblage of step (2) to remove the organic medium and organic binder therefrom and to sinter the noble metal and the dielectric material.

## Patentansprüche

1. Metallisierung zur Herstellung von Elektroden für Mehrschichten-Kondensatoren, die aus miteinander abwechselnden Schichten aus Elektroden-Material und dielektrischem Material aufgebaut sind, die bei einer Temperatur gebrannt sind, die ausreicht, um das Elektroden-Material und das dielektrische Material zu sintern, im wesentlichen bestehend aus

(a) Edelmetall(en), einer oder mehreren festen Lösungen von Edelmetallen oder Edelmetall-Gemischen, die während des Brennens eine bzw. mehrere feste Lösung(en) bilden, wobei die Solidus-Kurve des Edelmetalls oder der Edelmetalle oder der festen Lösung(en) unterhalb der Sintertemperatur des dielektrischen Materials liegt; und

(b) einem ein Nichtedelmetall oder Ion eines Nichtedelmetalls enthaltenden anorganischen Material, das im wesentlichen in (a) unterhalb der Sintertemperatur des dielektrischen Materials löslich ist und mit (a) bei oder unterhalb der Sintertemperatur des dielektrischen Materials eine Lösung bildet, wobei der Anteil von (b) dafür ausreicht, daß die Solidus-Kurve der festen Lösung von (a) und dem Nichtedelmetall oder Nichtedelmetall-Ion aus (b), die aus dem Sintern des Elektroden-Materials und des dielektrischen Materials resultiert, höher ist als die Solidus-Kurve von (a) und wenigstens um 10°C höher ist als die Sintertemperatur des dielektrischen Materials.

2. Metallisierung nach Anspruch 1, worin das Edelmetall eine Legierung von Palladium und Silber mit einer Solidus-Kurve von wenigstens 1000°C oder eine Mischung aus Palladium und Silber in den Mengenverhältnissen einer Legierung mit einer Solidus-Kurve von wenigstens 1000°C ist.

3. Metallisierung nach Anspruch 1, worin das das Nichtedelmetall enthaltende Material aus der aus ZnO, CdO, SnO$_2$, Ni, Ni$_3$B, NiO, GeO$_2$, SnO$_2$/Sb (feste Lösung), SnO$_2$/In (feste Lösung), MoO$_3$ und deren Mischungen, Lösungen und Vorstufen bestehenden Gruppe ausgewählt ist.

4. Dickfilm-Zusammensetzung, umfassend die Metallisierung nach irgendeinem der Ansprüche 1 bis 3, dispergiert in einem organischen Medium.

5. Verfahren zur Herstellung eines monolithischen Kondensators, umfassend

(1) das Aufbringen einer Schicht der Zusammensetzung nach Anspruch 4 auf jede von mehreren Schichten aus feinen Teilchen eines in einem organischen Bindemittel dispergierten dielektrischen Materials;

(2) das Laminieren mehrerer mit Elektroden bedruckten dielektrischen Schichten zur Bildung einer Baueinheit aus miteinander abwechselnden Schichten des dielektrischen Materials und der Dickfilm-Zusammensetzung; und

(3) das Brennen der Baueinheit aus Schritt (2) zum Entfernen des organischen Mediums und des organischen Bindemittels und zum Sintern des Edelmetalls und des dielektrischen Materials.

**Revendications**

1. Une métallisation pour la préparation d'électrodes pour condensateurs multicouches qui sont constitués de couches alternées de matière d'électrode et de matière diélectrique qui ont été cuites à une température suffisante pour fritter la matière d'électrode et la matière diélectrique, essentiellement constituée de:

(a) un ou plusieurs métaux nobles, une ou plusieurs solutions solides de métaux nobles ou mélanges de métaux nobles qui forment la ou les dites solutions solides pendant la cuisson, les solidus du ou des métaux nobles ou de la ou des solutions solides étant inférieur à la température de frittage de la matière diélectrique; et

(b) une matière minérale contenant un métal non noble ou un ion d'un métal non noble qui et sensiblement soluble dans (a) au-dessous de la température de frittage de la matière diélectrique et forme une solution avec (a) à une température égale ou inférieure à la température de frittage, la proportion de (b) étant suffisante pour que le solidus de la solution solide de (a) et du métal non noble ou de l'ion de métal non noble venant de (b), qui résulte du frittage de la matière d'électrode et de la matière diélectrique, soit supérieur au solidus de (a) et soit supérieur d'au moins 10°C à la température de frittage de la matière diélectrique.

2. La métallisation de la revendication 1, dans laquelle le métal noble est un alliage de palladium et d'argent ayant un solidus d'au moins 1000°C ou un mélange de palladium et d'argent qui correspond aux proportions d'un alliage ayant un solidus d'au moins 1000°C.

3. La métallisation de la revendication 1, dans laquelle la matière contenant le métal non noble est choisie dans le groupe formé par ZnO, CdO, SnO$_2$, Ni, Ni$_3$B, NiO, GeO$_2$, SnO$_2$/Sb (solution solide), SnO$_2$/In (solution solide), MoO$_3$ et leurs mélanges, solutions et précurseurs.

4. Une composition pour couches épaisses, comprenant la métallisation de l'une quelconque des revendications 1 à 3, dispersée dans un milieu organique.

5. Un procédé pour fabriquer un condensateur monolithique, consistant:

(1) à appliquer une couche de la composition de la revendication 4 à chacune d'une pluralité de couches de particules finement divisées de matières diélectrique dispersée dans un liant organique;

(2) à stratifier une pluralité des couches de diélectrique portant une électrode imprimée pour former un assemblage de couches alternées de matière diélectrique et de composition pour couches épaisses; et

(3) à cuire l'assemblage de l'étape (2) pour en éliminer le milieu organique et le liant organique et pour fritter le métal noble et la matière diélectrique.

# F I G. 1

11  10

12

12

11  10

# F I G. 2

10  11  10

12

12

10

# F I G. 3